# EUROPEAN PATENT APPLICATION

(11) **EP 1 142 702 A1**
(43) Date of publication of application: **10.10.2001**
(21) Application number: 99958484.0
(22) Date of filing: 07.12.1999
(51) Int. Cl.: B32B 27/30, B32B 5/18, B01D 71/36, B01D 71/48, B01D 39/16, C09J 5/00

(54) **POROUS MATERIAL, AIR FILTER FILTER MEDIUM, AIR FILTER UNIT AND SUPPORT MATERIAL FOR AIR FILTER FILTER MEDIUM**

(30) Priority: 11.12.1998 JP 35260598
(71) Applicant: Daikin Industries, Ltd., Osaka-shi, Osaka 530-8323 (JP)
(72) Inventor: INOUE, Osamu, Yodogawa Works of Daikin Ind. Ltd., Settsu-shi, Osaka 566-8585 (JP); URAOKA, Nobuki, Yodogawa Works of Daikin Ind. Ltd, Settsu-shi, Osaka 566-8585 (JP)
(74) Representative: HOFFMANN - EITLE
(86) International application number: JP9906841
(87) International publication number: WO0035672

(57) **Abstract**

An air filter medium having a polytetrafluoroethylene porous membrane and an air permeable support material laminated on at least one surface of the porous membrane, wherein the porous membrane and the support material are bonded together with a fibrous hot-melt adhesive in the form of discrete fibers and/or in the form of fibers connected with nodes, thereby maintaining a high collection efficiency of an air filter medium and a pressure loss low in comparison with a fusion bonded one.

## Description

### Field of the Invention

The present invention relates to a porous material, an air filter medium, an air filter unit and a support material for an air filter medium. In particular, the present invention relates to an air filter medium comprising a polytetrafluoroethylene porous membrane and an air-permeable support material, an air filter unit comprising such a filter medium, and a support material for such an air filter medium.

### Background Art

A porous membrane of polytetrafluoroethylene (hereinafter referred to as "PTFE") is proposed as a filter used for cleaning air in a clean room, etc. (see, for example, JP-A-5-202217). When the PTFE porous membrane is used, it is proposed to laminate thermoplastic materials such as spun-bond non-woven fabrics using long fibers with a core-sheath structure on both surfaces of the PTFE porous membrane to prevent flaws or the formation of pin holes, since the PTFE membrane is thin (see JP-A-6-218899).

In these years, with the increase of the degree of integration of semiconductors and the performance of liquid crystals, the cleanliness of clean rooms is increasing required to be high. Formerly, the number of solid fine particles is discussed, but recently total organic carbons (TOC) are also discussed. The increase of TOC may lead to the deterioration of the quality of the semiconductors or the liquid crystals, which are produced in the clean rooms. TOC means a total amount of various gaseous organic materials such as dodecane, tridecane, butylhydroxytoluene (BHT), phosphate esters, dioctyl phthalate, siloxane, etc.

However, the amount of TOC evolved from the conventional air filter media disclosed in the above publications is sometimes in a level innegligible in the clean room for the production of semiconductors having increasing degrees of integration or liquid crystals.

According to the study by the present inventors, it is found that TOC can be decreased when the air-permeable support material, which is laminated on the PTFE porous membrane, is made of polyester only. However, it is difficult to bond (fusion bond) the air-permeable support material of polyester, for example, a non-woven fabric of polyethylene terephthalate directly to the PTFE porous membrane while maintaining sufficient airpermeability (that is, maintaining low pressure loss).

Then, it may be contemplated to use a hot-melt adhesive to bond the air-permeable support material and the PTFE porous membrane. However, the present inventors have found that, with some application methods of the hot-melt adhesive, the pores of the PTFE porous membrane are clogged so that the collection efficiency of the air filter medium may decrease, the pressure loss may increase, or the PTFE porous membrane and the support material may not be well bonded.

### Disclosure of the Invention

One object of the present invention is to provide an air filter medium produced by bonding a PTFE porous membrane and an air-permeable porous film with a hot-melt adhesive to maintain a collection efficiency high, and prevent the increase of pressure loss in comparison with a fusion bonded one.

Another object of the present invention is to provide an air filter unit comprising such an air filter medium, and a support material for such an air filter medium.

The above objects are accomplished by a porous material comprising a polytetrafluoroethylene porous membrane and an air-permeable support material laminated on at least one surface of the porous membrane, wherein the polytetrafluoroethylene porous membrane and the air-permeable support material are bonded with at least one hot-melt adhesive selected from the group consisting of a discrete fiber-form hot-melt adhesive and a fiber-form hot-melt adhesive the fibers of which are connected with nodes;
an air filter medium comprising the above porous material of the present invention;
an air filter unit comprising a filter support member and the air filter medium of the present invention attached to the support member; and
a support material for an air filter medium, comprising an air-permeable support material and at least one hot-melt adhesive selected from the group consisting of a discrete fiber-form hot-melt adhesive and a fiber-form hot-melt adhesive the fibers of which are connected with nodes, the adhesive being applied to at least a part of the surface of the air-permeable support material.

### Best Mode for Carrying Out the Invention

### <PTFE porous membrane>

The PTFE porous membrane used in the porous material and the air filter medium according to the present invention is not limited and any known PTFE porous membrane may be used. In particular, an expanded PTFE porous membrane is preferable, which can achieve the performances required for an air filter unit used in a clean room and equipment for the production of semiconductors or liquid crystals such as a collection efficiency of floating particles, pressure loss, etc. (that is, the performances equal to or better than those of HEPA filters (High Efficiency Particulate Air Filters) or ULPA filters (Ultra Low Penetration Air Filter)).

For example, the PTFE porous membrane is preferable, when a pressure loss is in the range from 100 to 1,000 Pa when an air is passed through the membrane at a flow rate of 5.3 cm/sec., and a collection efficiency of the test particles of dioctyl phthalate (DOP) having a particle size of 0.10 to 0.12 µm is at least 99.0 %.

Such a PTFE porous membrane is disclosed in JP-A-5-202217, WO94/16802, etc.

The PTFE porous membrane used in the present invention may be easily produced by a known method. For example, PTFE fine powder is paste extruded together with an extrusion lubricant and rolled to obtain a tape and biaxially stretching the tape which is unsintered or semi-sintered. The details of such a production method are described in JP-A-5-202217, WO94/16802, etc.

The air-permeable support material to be laminated on the PTFE porous membrane is used to reinforce and protect the PTFE porous membrane. The lamination of the air-permeable support material enhances the handling of the air filter medium and improves the processability of the filter medium in the element processing, for example, pleating.

The air-permeable support material preferably has a smaller pressure loss than the PTFE porous membrane.

The air-permeable support material usually consists of a non-woven fabric, a fabric, a mesh, a porous membrane, a knit, etc. and preferably a non-woven fabric.

In general, the air-permeable support material is made of a fibrous material. In this case, the fiber preferably has an average diameter of 0.1 to 100 µm.

More preferably, the air-permeable support material is one substantially consisting of polyester fiber, in particular, polyester fiber containing no polyolefin.

The air-permeable support material may have at least two melting points.

Herein, the polyester may be any known polyester, and is preferably polyethylene terephthalate (PET), polybutylene terephthalate (PBT), etc. The polyester may be a copolymer.

Preferable examples of the polyester non-woven fabric include PET fiber non-woven fabric, PBT fiber non-woven fabric, non-woven fabric of a core-sheath structure fiber consisting of the core of PET and the sheath of PBT (PET/PBT core-sheath structure non-woven fabric), non-woven fabric of a core-sheath structure fiber consisting of the core of high-melting PET and the sheath of low-melting PET (high-melting PET/low-melting PET core-sheath structure non-woven fabric), non-woven fabric of a blended fiber of PET fiber and PBT fiber, and non-woven fabric of a blended fiber of high-melting PET fiber and low-melting PET fiber.

A preferable example of low-melting PET is a copolymeric polyethylene terephthalate obtained by copolymerizing isophthalic acid, adipic acid, diethylene glycol, polyethylene glycol, etc., and a preferable example of high-melting PET or general PET is polyethylene terephthalate having a melting point of about 260°C which substantially consists of terephthalic acid and ethylene glycol.

Also, PBT may be a copolymer with other copolymerizable component(s).

In one preferred embodiment, the air-permeable support material of the filter medium is a non-woven fabric of polyester fiber, in particular, long staple one, since the long staple non-woven fabric can be produced in the course of melt spinning (non-woven fabric directly produced by spinning), and thus the non-woven fabric can maintain a clean state from beginning. The non-woven fabric comprising the long staples may be produced by a spun bond method, a flush spinning method, a melt blow method, etc. Among them, the spun bond method is preferable.

The non-woven fabric has a weight per unit area of 10 to 600 g/m², preferably 15 to 300 g/m², more preferably 15 to 100 g/m². When the weight per unit area exceeds 100 g/m², it is difficult to process the filter medium (i.e. to fold the filter medium), when it is processed in the form of a pleats type air filter, and the cost tends to increase.

The non-woven fabric comprising short staples should be passed through a card to unweave the staples. Thus, a lubricant is applied to the staples to maintain the passing property in this step. In such a case, the non-woven fabric is used after removing the lubricant. The non-woven fabric comprising the short staples may be produced by a needle punch method, a water jet method, a stitch bond method, a thermal bond method, a resin bond method, etc.

In the filter medium of the present invention, the air-permeable support material may be a flame-retardant one. Herein, the "flame-retardant" means that the maximum carbonized length is 150 mm or less when it is measured according to "a combustion test of a filter material for an air cleaning machine" (JACA-No. 11-1977) regulated by the Filter Material Regulation Committee of the Japan Air Cleaning Association (JACA).

To impart the flame-retardance to the filter medium, preferably a compound which has the flame-retardance is copolymerized. In particular, a polyester fiber with which an organic phosphorus compound as a flame-retardant is copolymerized is preferable since the filter medium as a whole can have the flame-retardance with suppressing the generation of organic materials and also with no liberation of phosphorus itself.

As an application method of the hot-melt adhesive (HMA), a method using a conventional hot-melt applicator may be used insofar as HMA can be applied to the air-permeable support material and at least a part of its surface in the form of discrete fibers and/or in the form of fibers connected with the nodes. It is preferable to continuously apply HMA to an adherent (the support material) with the pressure of hot air in the non-contact state while moving the adherent to accumulate HMA in the fibrous form on the adherent.

In particular, HMA is preferably sprayed in the uniform fibrous form by discharging HMA from a micronozzle (e.g. a nozzle having a diameter of 0.3 to 0.5 mm) and conveying the sprayed HMA with a high speed stream of hot air so that the fibrous layer of HMA is accumulated and formed on the surface of the adherent. Such a method applies HMA in a molten state at a high temperature (e.g. 180°C or higher). However, even if HMA is applied to the air-permeable support material having a thin thickness or a relative low melting point by such a method, the support material is less damaged with heat since HMA is finely unified and accumulated on the air-permeable material in the fibrous state. Furthermore, when the support material having the applied HMA layer is adhered to the PTFE porous membrane, the clogging of the pores of the PTFE porous membrane can be prevented as much as possible.

To effectively form the HMA fibrous layer on the adherent such as the non-woven fabric, it is important to control the amount and temperature of HMA, the pressure and temperature of the hot air, and so on.

The preferable amount of HMA for the formation of the fibrous layer depends on the traveling speed (line speed) of the adherent, and is preferably from 0.04 to 30 g/m², more preferably from 0.1 to 10 g/m², when the traveling speed is 10 m/min.

The melt viscosity of HMA is preferably 20,000 cp or less, more preferably 10,000 or less.

The discharging temperature of HMA and the temperature of the hot air are preferable from 50 degrees lower than the melting temperature of HMA to 100 degrees (°C) higher than the melting temperature of HMA, more preferably from the melting temperature of HMA to 50 degrees higher than the melting temperature of HMA.

The pressure of the hot air is preferably from 0.1 kgf/cm² to 5.0 kgf/cm², more preferably from 0.2 kgf/cm² to 2.0 kgf/cm².

Examples of the hot-melt adhesive include polyamide base, polyester base, synthetic rubber (elastomer) base, EVA base and modified olefin base hot-melt adhesives. Among them, the polyamide base and polyester base hot-melt adhesives are preferable from the viewpoint of TOC.

The diameter of the fiber of the hot-melt adhesive, which is applied in the form of discrete fibers or in the form of fibers connected with the nodes is usually 100 µm or less, preferably from 0.1 to 30 µm.

The fibrous form means that the adhesive looks like fibers and contains neither large agglomerates nor spherical particles.

The air filter medium of the present invention may be produced by laminating the air-permeable support material carrying the fibrous hot-melt adhesive applied to one surface thereof on one or both surfaces of the PTFE porous membrane with the adhesive-applied surface facing the PTFE porous membrane and heating the laminate optionally with applying pressure.

The heating may be carried out with any heating means. In general, the laminate of the air-permeable support material and the PTFE porous membrane is passed over a heating roll. In this process, the laminate is preferably heated without the application of pressure (for example, with its own weight, or without pinching while the laminate being provided on the heating rolls) to avoid the deterioration of the permeability of the filter medium, although the laminate may be pressed with press rolls, if necessary.

The heating temperature may be determined according to the kind of the hot-melt adhesive used.

In the air filter unit of the present invention, the air filter medium is preferably received in a support member, which functions as a frame, in the corrugated form, and its periphery is sealed.

In a preferable embodiment, the air filter unit comprises the air filter medium, which is processed in a mini-pleats type filter element having stripe- or ribbon-form spacers of a hot-melt adhesive. The air filter having such a structure is compact and effectively utilizes the whole surface area, and thus it can be preferably used in equipment for the production of electronic devices such as the semiconductors, the liquid crystals, etc.

In the above, the present inventions are explained by making reference to the air filter medium and air filter unit comprising the porous material of the present invention. However, the porous material of the present invention may be used advantageously as a gas vent used in a disc apparatus, etc.; an air vent of a fuel tank, a fire-resistant box, etc.; an air-permeable packaging material of repellents, deoxidizers, etc.; a protective material of devices such as gas sensors, etc.; a protective layer of medical pads; a sanitary material such as paper diapers; a water-proof material; a gas-liquid separation membrane; a separator of a cell; etc.

### Examples

The present invention will be illustrated by the following Example more in detail.

In the Examples, a filter unit was produced with assembling an air filter medium having a whole surface area of 35 times larger than the area of an opening of a filter support frame in the frame.

A pressure loss and a particle collection efficiency were measured according to JIS B 9927 at an air velocity of 0.5 m/sec. DOP particles having a particle size of 0.1 to 0.2 µm were used as test particles in the measurement of the particle collection efficiency.

### Example 1

Using a hot-melt adhesive applicator (manufactured by Kabushikikaisha SUN TOOLS), a polyester hot-melt adhesive was heated to 210°C so that its melt viscosity reached 10,000 cp, and then applied with a micronozzle having a diameter of 0.5 mm at a discharging rate of 50 g/min./m to a spun bond non-woven fabric of polyethylene terephthalate (PET) (weight per unit area: 50 g/m²; pressure loss: 2 pa), which traveled at a line speed of 10 m/min., while adjusting the pressure of the hot air at 1.2 kgf/cm² and the temperature of the hot air at 230°C. Thus, an air-permeable support material, to which the hot-melt adhesive was applied in the form of fibers connected with nodes at a coating amount of 5 g/m², was produced.

A pair of the air-permeable support materials were laminated on the both surfaces of a PTFE porous membrane (weight per unit area: 2 g/m²; pressure loss: 327 pa; thickness: 4 µm) with the adhesive-applied surface facing the PTFE porous membrane, and the laminate was allowed in contact with a heating roll maintained at 200°C at a line speed of 10 m/min. using no pressure roll to obtain an air filter medium comprising the porous material. The fibrous hot-melt adhesive had a fiber diameter of 20 µm.

The filter medium obtained was assembled in a filter support frame (610 x 610 x 65 mm) to produce a filter unit, and the pressure loss and the particle collection efficiency were measured. The pressure loss was 61 pa, and the particle collection efficiency was 99.9999%.

### Example 2

Using the same hot-melt adhesive applicator as that used in Example 1, a polyamide hot-melt adhesive was heated to 200°C so that its melt viscosity reached 5,500 cp, and then applied with a micronozzle having a diameter of 0.5 mm at a discharging rate of 50 g/min./m to a spun bond non-woven fabric of polyethylene terephthalate (PET) (weight per unit area: 40 g/m²; pressure loss: 2 pa), which traveled at a line speed of 10 m/min., while adjusting the pressure of the hot air at 1.0 kgf/cm² and the temperature of the hot air at 230°C. Thus, an air-permeable support material, to which the hot-melt adhesive was applied in the form of fibers connected with nodes at a coating amount of 5 g/m², was produced.

A pair of the air-permeable support materials were laminated on the both surfaces of a PTFE porous membrane (weight per unit area: 2 g/m²; pressure loss: 338 pa; thickness: 5 µm) with the adhesive-applied surface facing the PTFE porous membrane, and the laminate was allowed in contact with a heating roll maintained at 200°C at a line speed of 10 m/min. using no pressure roll to obtain an air filter medium comprising the porous material. The fibrous hot-melt adhesive had a fiber diameter of 15 µm.

The filter medium obtained was assembled in a filter support frame (610 x 610 x 65 mm) to produce a filter unit, and the pressure loss and the particle collection efficiency were measured. The pressure loss was 63 pa, and the particle collection efficiency was 99.9999%.

### Comparative Example 1

Using a print-wheel type hot-melt adhesive applicator (manufactured by SANSEI RIKA Kabushikikaisha), the same hot-melt adhesive as that used in Example 1 was applied at a weight of 5 g/m² on the same PET spun bond non-woven fabric as that used in Example 1 to obtain an air-permeable support material having a pressure loss of 21 pa, on the surface of which the hot-melt adhesive was applied in the form of dots.

A pair of the air-permeable support materials were laminated on the both surfaces of a PTFE porous membrane (weight per unit area: 2 g/m²; pressure loss: 327 pa; thickness: 4 µm) with the adhesive-applied surface facing the PTFE porous membrane, and the laminate was allowed in contact with a heating roll maintained at 200°C at a line speed of 10 m/min. using no pressure roll to obtain an air filter medium comprising the porous material.

A filter unit was produced in the same manner as in Example 1 except that the medium obtained in the previous step was used, and the pressure loss and the particle collection efficiency were measured. The pressure loss was 60 pa, and the particle collection efficiency was 99.97%. The particle collection efficiency greatly decreased in comparison with the filter unit of Example 1.

### Comparative Example 2

A filter unit was produced in the same manner as in Comparative Example 1 except that a T-die applicator was used to apply the hot-melt adhesive, and the pressure loss and the particle collection efficiency were measured. The hot-melt adhesive was applied on the surface of the support material in the form of agglomerates having a size of 100 µm without including any fiber. The pressure loss was 65 pa, and the particle collection efficiency was 99.9992%. The pressure loss and the particle collection efficiency both decreased in comparison with the filter unit of Example 1. In particular, the particle collection efficiency was worse than that of Example 1 by about one order, and thus the filter unit of this Comparative Example does not satisfy the performances required for the ULPA filter in the next generation.

### Comparative Example 3

Using a sintering type adhesive applicator, the same hot-melt adhesive as that used in Example 1 was applied at a weight of 5 g/m² on the same PET spun bond non-woven fabric as that used in Example 1 to obtain an air-permeable support material having a pressure loss of 21 pa. However, this support material provided a low adhesion strength between the PET non-woven fabric and the PTFE porous membrane, and thus could not be laminated on the PTFE porous membrane with the same method as that used in Example 1.

### Comparative Example 4

A filter unit was produced in the same manner as in Example 1 except that a rubber roll for nipping was provided on the heating roll, and the air-permeable support materials produced in Comparative Example 3 were laminated to the PTFE porous membrane with the heating roll while applying a pressure with the rubber roll, and the pressure loss and the particle collection efficiency were measured. The pressure loss was 93 pa, and the particle collection efficiency was 99.997%. The pressure loss and the particle collection efficiency both greatly decreased in comparison with the filter unit of Example 1.

## Claims

1. A porous material comprising a polytetrafluoroethylene porous membrane and an air-permeable support material laminated on at least one surface of the porous membrane, wherein said polytetrafluoroethylene porous membrane and said air-permeable support material are bonded with at least one hot-melt adhesive selected from the group consisting of a discrete fiber-form hot-melt adhesive and a fiber-form hot-melt adhesive the fibers of which are connected with nodes.

2. An air filter medium comprising a porous material according to claim 1.

3. An air filter unit comprising a filter support member, and an air filter medium according to claim 2 which is attached to said support member.

4. The air filter unit according to claim 3, wherein said medium is received in said support member in a corrugated form, and the periphery of said medium is sealed.

5. A support material for an air filter medium, comprising an air-permeable support material and at least one hot-melt adhesive selected from the group consisting of a discrete fiber-form hot-melt adhesive and a fiber-form hot-melt adhesive the fibers of which are connected with nodes, the adhesive being applied to at least a part of the surface of the air-permeable support material.

6. A method for producing a support material for an air filter medium comprising the steps of:
spraying a hot-melt adhesive in the form of fibers by conveying the molten hot-melt adhesive discharged from a nozzle with a stream of hot air, and
accumulating said fibrous hot-melt adhesive on at least a part of the surface of an air-permeable support material.

7. A porous material comprising a laminate of a polytetrafluoroethylene porous membrane and a support material for an air filter medium according to claim 5.

8. An air filter medium comprising a porous material according to claim 7.

9. An air filter unit comprising a filter support, and an air filter medium according to claim 8 which is assembled in said support.
